# FASCICULE DE BREVET EUROPEEN

(11) **EP 3 425 457 B1**
(45) Date de publication et mention de la délivrance du brevet: **27.05.2020**
(21) Numéro de dépôt: 17180057.6
(22) Date de dépôt: 06.07.2017
(51) Int. Cl.: G04B 43/00, G01P 15/03, G04B 47/06, G01P 15/08

(54) **INDICATEUR DE CHOC POUR MONTRE**
STOSSINDIKATOR FÜR ARMBANDUHR
WATCH SHOCK INDICATOR

(43) Date de publication de la demande: 09.01.2019
(73) Titulaire: Montres Breguet S.A., 1344 L'Abbaye (CH)
(72) Inventeur: LENOIR, Deirdré, 1347 Le Sentier (CH)
(74) Mandataire: ICB SA

(56) Documents cités:
- CH-A1- 701 867
- US-B1- 8 234 994

## Description

### Domaine de l'invention

L'invention concerne un dispositif indicateur de choc pour montre, agencé pour être inséré à l'intérieur d'une montre, et comportant un élément de structure auquel est fixée au moins une masselotte par l'intermédiaire d'au moins un élément de liaison en matériau élastique ou ductile ou fragile, déformable élastiquement ou plastiquement lors des mouvements imprimés à ladite au moins une masselotte.

L'invention concerne encore une montre comportant au moins un tel indicateur de choc.

L'invention concerne le domaine des montres, et plus particulièrement l'expertise en après-vente de montres de grand prix nécessitant des précautions d'emploi, telles que grandes complications ou similaires.

### Arrière-plan de l'invention

Les chocs sont une problématique récurrente dans l'industrie horlogère. Les montres sont qualifiées pour résister à une certaine hauteur de chute selon plusieurs normes NIHS. Il est cependant difficile en pratique de quantifier les accélérations réelles subies par la montre au cours d'un impact. Lors de projets de recherche sur les chocs, ou lors des qualifications (habillage ou mouvement) faites au laboratoire, plusieurs appareils de mesure coûteux et des procédures difficiles à mettre en place permettent d'obtenir la valeur de cette accélération maximale subie.

Mais il n'existe pas de dispositif permettant d'accéder facilement et rapidement à cette information. De plus, en cas de retour client, les services SAV manquent d'informations sur l'historique d'une pièce et les chocs subis. Une telle indication permettrait parfois de cibler plus rapidement le problème, et les casses éventuelles apparues dans le mouvement.

Le document CH 701 867 A1 au nom de la Manufacture Horlogère de la Vallée de Joux décrit une montre comportant un dispositif pour mesurer et indiquer une grandeur relative à une accélération subie par la montre-bracelet, ce dispositif comprenant un organe indicateur de cette grandeur, une masse mobile agencée pour entraîner l'organe indicateur, et un moyen élastique agencé pour agir sur le déplacement de la masse mobile, ladite masse étant montée pour se déplacer par inertie lorsque la montre-bracelet subit une accélération, à partir d'une position de repos dans une direction opposée à l'action exercée par le moyen élastique, afin d'entraîner l'organe indicateur selon un déplacement dont l'amplitude est fonction du déplacement momentané de la masse.

### Résumé de l'invention

L'invention se propose de mettre au point un indicateur de choc pour montre, interne à la montre, accessible uniquement après démontage de la montre, fiable, et peu coûteux, qui soit un indicateur fiable de l'accélération maximale subie par la montre au cours des essais ou de l'utilisation client.

A cet effet, l'invention concerne un dispositif indicateur de choc pour montre selon la revendication 1.

L'invention concerne encore une montre comportant au moins un tel indicateur de choc.

### Description sommaire des dessins

D'autres caractéristiques et avantages de l'invention apparaîtront à la lecture de la description détaillée qui va suivre, en référence aux dessins annexés, où :

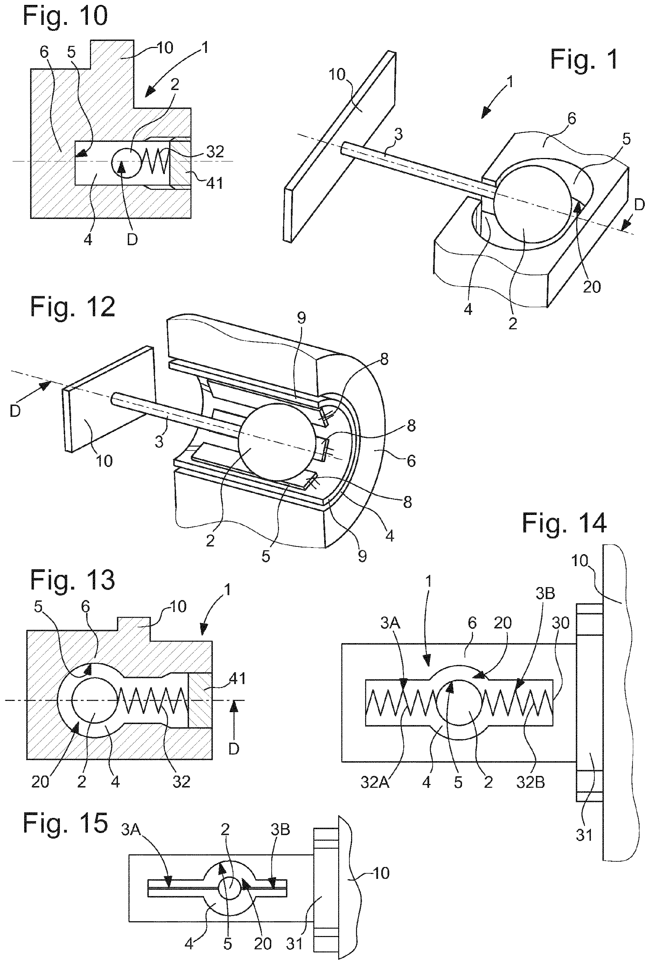

- la figure 1 représente, de façon schématisée et en perspective, un dispositif indicateur de choc selon l'invention, destiné à être incorporé dans une montre, et comportant un témoin de choc composé d'une masselotte mobile dans un logement face à une surface intérieure de ce logement, et à proximité immédiate de celle-ci, cette masselotte étant suspendue à un élément de liaison élastique encastré dans une structure, et agencée pour générer un marquage permanent, soit sur la surface intérieure du logement, soit sur la périphérie propre de cette masselotte, en cas de choc important subi par cette montre, quand l'accélération imprimée à cette masselotte est supérieure à un seuil inférieur d'accélération donné;
- la figure 2 représente, de façon similaire à la figure 1, une autre variante de dispositif indicateur de choc, où seule une partie du logement est représentée, sous la forme d'un dièdre, et où la masselotte est moins ductile que les parois du logement, qui sont déformées de façon irréversible lors d'un impact ;
- la figure 3 représente, de façon similaire à la figure 2, une autre variante où les parois du logement sont recouvertes intérieurement d'une couche superficielle, agencée pour être transférée sur la masselotte sous la forme d'un dépôt de transfert, sous une percussion de la masselotte ;
- la figure 4 représente, de façon similaire à la figure 2, une autre variante de dispositif indicateur de choc, comportant une rangée de masselottes avec chacune un seuil d'accélération différent ;
- la figure 5 représente, de façon similaire à la figure 3, une autre variante de dispositif indicateur de choc, comportant une rangée de masselottes avec chacune un seuil d'accélération différent, et où les parois des masselottes sont recouvertes extérieurement d'une couche superficielle, agencée pour être transférée sur la paroi interne du logement sous la forme d'un dépôt de transfert, sous une percussion de la masselotte;
- la figure 6 représente, de façon similaire à la figure 1, une autre variante où la masselotte est agencée pour percuter un matériau fragile au niveau d'un élément sécable agencé au voisinage de la surface intérieure du logement, et pour le briser lors de sa percussion contre une paroi, quand la masselotte est soumise à une accélération supérieure au seuil inférieur d'accélération ;
- la figure 7 représente, de façon schématisée et en perspective, une autre variante avec une pluralité d'éléments sécables, agencés pour se rompre sous l'effet de seuils d'accélération différents, ou agencés pour coopérer avec au moins une masselotte selon la variante de la figure 6;
- les figures 8 et 9 représentent, de façon similaire à la figure 2, respectivement avant et après impact, une autre variante où la masselotte est plus ductile que les parois du logement, et qui est déformée de façon irréversible lors d'un impact ;
- la figure 10 représente, de façon schématisée et en coupe, une autre variante, où la structure est ici une carrure de la boîte de montre avec, dans son épaisseur, un logement cylindrique dans lequel une masselotte est suspendue à un ressort hélicoïdal encastré dans un bouchon vissé dans la carrure, du côté inaccessible à l'utilisateur ;
- la figure 11 représente, de façon schématisée et en perspective coupée, une autre variante, où la structure est aussi une carrure de la boîte de montre, sur laquelle est rapporté, du côté inaccessible à l'utilisateur, un premier insert enfermant un témoin de choc selon l'invention, et où une semelle d'un deuxième insert, dont la partie extérieure n'est pas représentée, cette semelle portant un peigne comportant plusieurs masselottes chacune à l'extrémité d'un élément de liaison ;
- la figure 12 représente, de façon schématisée et en perspective coupée, une autre variante, avec un logement cylindrique comportant plusieurs éléments sécables similaires à celui de la figure 6 agencés sur ses génératrices, et entre lesquels est mobile une masselotte similaire ;
- la figure 13 représente, de façon similaire à la figure 10, une autre variante similaire, où le logement est sphérique;
- la figure 14 représente, de façon similaire à la figure 13, une autre variante similaire, où la masselotte est suspendue à plusieurs éléments de liaison, et où l'ensemble de l'indicateur de choc est dans un insert rapporté sur la structure, de façon similaire à la figure 11 ;
- la figure 15 représente, de façon similaire à la figure 14, une autre variante similaire, où la masselotte est suspendue à deux fils, et où l'ensemble de l'indicateur de choc est dans un insert rapporté sur la structure ;
- la figure 16 représente, de façon similaire à la figure 11, une autre variante à l'inverse des autres variantes illustrées, où une platine de la montre comporte deux lames flexibles formant un vé et qui portent ensemble une masselotte en U, qui entoure un pion fixé dans la carrure et qui porte la surface antagoniste.

### Description détaillée des modes de réalisation préférés

L'invention concerne ainsi un dispositif indicateur de choc 1 pour montre 100, agencé pour être inséré à l'intérieur d'une montre.

L'invention peut se présenter sous plusieurs variantes.

Le mécanisme de base comporte au moins une masselotte 2 fixée à au moins un élément de liaison 3. Dans un mode de réalisation particulier, cet élément de liaison 3 est flexible, notamment de type ressort. La masselotte 2 à l'extrémité de l'élément de liaison 3, et les rigidités axiales et/ou radiales de l'élément de liaison 3 sont connus. Il est donc facile de calculer, de manière analytique et/ou numérique et/ou expérimentale, la déflexion de l'ensemble en fonction d'une accélération appliquée.

Plusieurs solutions sont possibles pour tirer avantage de ce comportement et sont illustrées par les figures.

Le dispositif indicateur de choc 1 comporte une structure 10, à laquelle est fixée au moins une masselotte 2, par l'intermédiaire d'au moins un élément de liaison 3 en matériau élastique ou ductile ou fragile, déformable élastiquement ou plastiquement lors des mouvements imprimés à la masselotte 2 correspondante.

De façon particulière et non limitative, cet élément de liaison 3 est encastré, soit directement dans la structure 10, soit dans une semelle 31 rapportée et fixée sur cette structure, ou similaire.

Selon l'invention, au moins une masselotte 2 est mobile au voisinage d'une surface antagoniste 5 fixe, que comporte la structure 10 elle-même, ou que comporte un autre élément 120 d'une boîte 110 de montre.

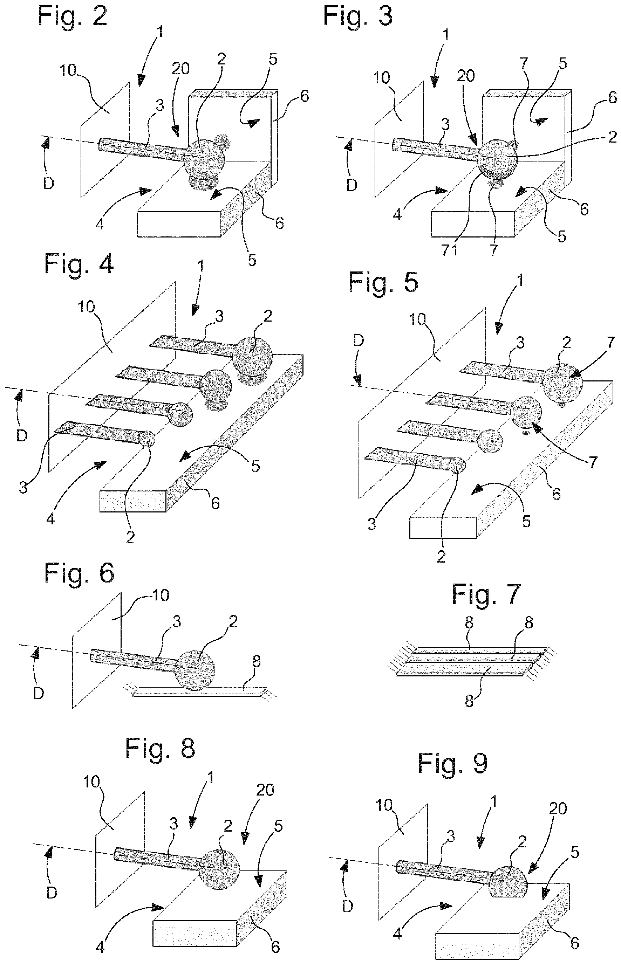

Cette masselotte 2 est agencée pour venir en contact avec cette surface antagoniste 5, de façon à imprimer, quand l'accélération imprimée à cette au moins une masselotte 2 est supérieure à un seuil inférieur d'accélération donné, un témoin d'impact ou une déformation permanente ou une rupture à la masselotte 2 et/ou à l'élément de liaison 3 et/ou à la surface antagoniste 5, ou encore à un élément sécable 8 intégré au dispositif indicateur de choc 1 quand celui-ci en comporte comme décrit plus bas dans une variante particulière visible sur la figure 6 ou 12.

Les valeurs d'accélération relatives à des chocs accidentels sont en général de l'ordre de 1500g à 5000g. La valeur de 1300g peut notamment être retenue comme seuil inférieur d'accélération donné.

Plus particulièrement, au moins une masselotte 2 est appairée avec une surface antagoniste 5, notamment une surface intérieure, avec laquelle la masselotte 2 est la seule à coopérer, pour former ensemble un témoin de choc 20. Plus particulièrement encore, chaque masselotte 2 est appairée avec une telle surface antagoniste 5, avec laquelle la masselotte 2 est la seule à coopérer, pour former ensemble un tel témoin de choc 20.

Dans des variantes, la masselotte 2 et/ou le composant porteur de la surface antagoniste 5 est en matériau élastique ou ductile ou fragile, déformable élastiquement ou plastiquement lors des mouvements imprimés à cette au moins une masselotte 2.

Dans une réalisation particulière, au moins une telle masselotte 2 est mobile dans un logement 4 de la structure 10, au voisinage d'une surface antagoniste 5, notamment une surface intérieure d'une paroi 6 du logement 4. Cette masselotte 2 y est agencée pour venir en contact avec la surface antagoniste 5, notamment une surface intérieure, quand l'accélération imprimée à cette au moins une masselotte 2 est supérieure à un seuil inférieur d'accélération donné.

L'invention peut être réalisée sous des formes différentes, dont certaines sont, non limitativement, illustrées par les figures.

Tout d'abord, on voit que l'élément de liaison 3 peut être, selon la variante, en matériau élastique ou ductile ou fragile, et peut être déformable élastiquement ou plastiquement.

Dans la variante préférée où l'élément de liaison 3 est en matériau élastique, cet élément de liaison 3 peut notamment prendre la forme d'une lame élastique sensiblement droite, ou d'une pluralité de telles lames élastiques, notamment et non limitativement parallèles entre elles, ou encore comporter au moins un ressort hélicoïdal 32, ou un ressort spiral, ou similaire.

La lame élastique s'entend ici au sens large, ce peut être une poutre prismatique, cylindrique, ou autre, pleine ou creuse, ou un assemblage complexe de poutres élémentaires.

Dans une variante l'élément de liaison 3 peut encore comporter au moins un fil, notamment un fil de torsion. Dans une variante particulière, la masselotte 2 est simplement disposée entre deux fils tendus.

Un tel élément de liaison 3, de préférence à limite d'élasticité élevée, qui est déformable élastiquement dans l'ensemble du domaine des accélérations pour lequel est conçu la montre, est conçu pour revenir à sa position de repos, ce qui permet d'enregistrer plusieurs chocs avec la même masselotte 20, et l'invention s'attache alors à déterminer l'ordre de grandeur de l'accélération maximale à laquelle la masselotte 2 a été soumise, et aussi selon quelle direction par rapport à la boîte 110 que comporte la montre 100. L'élément de liaison 3 peut notamment être réalisé dans un matériau micro-usinable, tel que silicium, diamant DLC (diamond like carbon) ou similaire, par un procédé « MEMS » ou « LIGA » ou similaire, ou encore être réalisé dans un acier à ressort d'horlogerie de module d'élasticité supérieur à 200 GPa, ou un matériau similaire.

Quand l'élément de liaison 3, ou la masselotte 2, ou le composant porteur de la surface antagoniste 5, est dans un matériau avec une limite d'élasticité plus basse, le domaine élastique est très étroit, et l'élément de liaison 3, ou la masselotte 2, ou le composant porteur de la surface antagoniste 5, adopte une déformation plastique permanente sous l'effet d'une accélération ou d'un choc relativement faible, facile à constater en après-vente. L'élément de liaison 3, ou la masselotte 2, ou le composant porteur de la surface antagoniste 5, peut alors être réalisé dans un alliage léger par exemple à base d'aluminium, ou un alliage précieux, à base d'argent ou d'or, ou dans un autre matériau de module d'élasticité inférieur à 70 GPa.

Dans la variante particulière où le dispositif indicateur de choc 1 comporte un élément en matériau fragile, par exemple l'élément de liaison 3, ou un élément sécable 8, cet élément en matériau fragile est conçu pour rompre à un seuil relativement bas de limite d'élasticité; cette variante impose néanmoins que, selon le cas, l'élément de liaison 3, chaque élément sécable 8, et la masselotte 2 que porte l'élément de liaison 3, soient confinés dans un logement 4, ou bien directement si ce logement 4 est fermé et si des débris ne risquent pas de polluer le mécanisme de la montre 100, ou bien enfermés dans une enveloppe souple 9 disposée à l'intérieur du logement 4, de façon à ce que, en cas de rupture d'un élément de liaison 3, ou d'un élément sécable 8, les débris issus de cette rupture restent enfermés dans cette enveloppe souple 9. Un tel élément de liaison 3 ou un tel élément sécable 8 peut être réalisé dans un matériau de module d'élasticité inférieur à 50 GPa.

Les figures 1 à 6, 8, 9, 12, illustrent le cas où l'élément de liaison 3 est mobile en flexion autour d'un axe D, par rapport à son point d'encastrement dans la structure 10. Les figures 10 et 13 illustrent une autre variante où l'élément de liaison 3 est mobile, non seulement en flexion autour d'un axe D, par rapport à son point d'encastrement dans la structure 10, mais aussi en compression ou extension axiale selon cet axe D, ce qui permet une visualisation des chocs selon les trois dimensions. Ces variantes de réalisation de l'élément de liaison 3 ne sont pas limitatives.

La figure 14 illustre une autre variante dans laquelle une masselotte 2 est suspendue à plusieurs éléments de liaison 3, dans ce cas particulier un premier élément de liaison 3A et un deuxième élément de liaison 3B de part et d'autre de la masselotte, ici constitués non limitativement par des ressorts hélicoïdaux 32A et 32B. En effet, si les autres figures représentent un ensemble élément de liaison 3 et masselotte 2 en porte-à-faux par rapport à l'encastrement de l'élément de liaison 3, ce sont des réalisations particulières non limitatives, qui permettent aussi d'illustrer plus simplement les caractéristiques alternatives de l'invention.

Dans une application particulière de cette dernière variante, quand la masselotte 2 est suspendue à plusieurs éléments de liaison 3, ces derniers ne sont pas identiques, et présentent des caractéristiques différentes, par exemple un premier élément de liaison est agencé pour adopter une déformation permanente dans le domaine plastique, ou pour rompre, dès l'atteinte d'un premier seuil d'accélération, un deuxième élément de liaison est agencé pour adopter une déformation permanente dans le domaine plastique, ou pour rompre, dès l'atteinte d'un deuxième seuil d'accélération, et ainsi de suite.

Dans une variante, au moins un élément de liaison 3 est réalisé monobloc avec la masselotte 2 qu'il porte.

Dans une autre variante, au moins un élément de liaison 3 est réalisé monobloc avec la structure 10 qui le porte.

Dans une autre variante encore, au moins un élément de liaison 3 est réalisé monobloc à la fois avec la masselotte 2 qu'il porte, et avec la structure 10 qui le porte.

Le couple entre une masselotte 2 et une surface antagoniste 5, notamment une surface intérieure formant un témoin de choc 20 est agencé de façon à permettre une visualisation facile des traces d'un choc important, par un technicien de laboratoire ou d'après-vente. A cet effet, ce témoin 20 est agencé pour laisser une trace en relief et/ou une trace visuelle, sur la masselotte 2 et/ou la surface antagoniste 5, notamment une surface intérieure.

Dans la réalisation de la figure 2, au sein d'un témoin 20, au moins une paroi 6, et de préférence chaque paroi 6, est agencée pour subir une déformation locale irréversible sous la percussion de la masselotte 2, quand la masselotte 2 est soumise à une accélération supérieure au seuil inférieur d'accélération. Cette figure 2 est illustrée de façon simplifiée avec seulement une partie du logement 4, avec deux surfaces intérieures 5 à l'équerre formant un dièdre, chacune d'elles portant une empreinte de déformation, d'ampleur différente, provoquée par une percussion causée par la masselotte 2 selon des directions différentes. Le logement 4 peut être l'intérieur d'un polyèdre, ou d'une surface de révolution axiale autour d'un axe coïncidant avec un axe linéaire que comporte alors l'élément de liaison 3 tel que cylindre, ellipsoïde, sphère ou autre. De façon particulière, au moins une surface antagoniste 5, notamment une surface intérieure, agencée pour coopérer avec une masselotte 2 est cylindrique ou sphérique, pour matérialiser la présence d'un choc selon plusieurs degrés de liberté.

Plus particulièrement, et tel que visible sur les variantes non limitatives illustrées, au moins une masselotte 2 est cylindrique ou sphérique, pour matérialiser la présence d'un choc selon plusieurs degrés de liberté.

Dans la réalisation de la figure 2, la masselotte 2 peut venir impacter de manière irréversible une matière déformable, par exemple de l'argile ou de la plasticine ou similaire, ou plus généralement une paroi 6 plus ductile que la masselotte 2. La surface et profondeur de la zone déformée donnent l'indication de l'intensité de l'accélération maximale subie par la masselotte 2. Sur l'exemple de la figure 2 la zone grisée représente la paroi déformée en profondeur; ici l'intensité est différente sur les deux axes. La masselotte 2 peut être contenue dans un logement 4 cubique, qui permet de connaître les accélérations selon deux axes. Le mieux est qu'elle soit contenue dans un logement 4 cylindrique ou sphérique pour donner une indication selon n'importe quel axe, sauf son propre axe dans le cas général, ou même selon son propre axe dans l'exemple de la figure 13.

Dans la réalisation des figures 8 et 9, au sein d'un témoin 20, les parois 6 sont moins ductiles que la masselotte 2, qui est agencée pour subir une déformation locale irréversible lors de sa percussion contre une paroi 6, quand la masselotte est soumise à une accélération supérieure au seuil inférieur d'accélération. La masselotte 2 est alors en matériau déformable irréversible. En venant impacter une surface antagoniste 5, notamment une surface intérieure dure, d'une paroi 6 en acier, rubis ou similaire, notamment une surface antagoniste 5, notamment une surface intérieure plane, la marque reste visible, et sa déformée permet de déterminer l'accélération maximale subie

Dans la réalisation de la figure 3, au sein d'un témoin 20, au moins une paroi 6, et de préférence chaque paroi 6, est recouverte, au niveau de la surface antagoniste 5, notamment une surface intérieure, d'une couche superficielle 7, laquelle est agencée pour être au moins partiellement transférée sur la masselotte 2 sous la forme d'un dépôt de transfert 71, sous la percussion de la masselotte 2, quand la masselotte 2 est soumise à une accélération supérieure au seuil inférieur d'accélération. Cette couche superficielle 7 peut être une couche d'encre ou de colorant, une poudre d'oxyde, ou une poudre métallique, ou un produit visqueux tel que de la graisse, ou autre. Comme la figure 2, cette figure 3 est illustrée de façon simplifiée avec seulement une partie du logement 4, avec deux surfaces intérieures 5 à l'équerre formant un dièdre, chacune d'elles portant un dépôt de transfert, d'ampleur différente, provoqué par une percussion causée par la masselotte 2 selon des directions différentes.

La figure 5 illustre la configuration inverse de la figure 3, où, au sein d'un témoin 20, c'est la masselotte 2 qui est recouverte d'une couche superficielle 7, qui est agencée pour être au moins partiellement transférée sur la surface antagoniste 5, notamment une surface intérieure, lors de sa percussion contre une paroi 6, quand la masselotte est soumise à une accélération supérieure au seuil inférieur d'accélération. La masselotte 2 peut être recouverte d'une couche de pigment ou d'une encre de couleur, ou autre. En venant impacter une surface antagoniste 5, notamment une surface intérieure, un dépôt de couleur, très facile à visualiser, se fait sur cette surface antagoniste 5, notamment une surface intérieure. Les zones colorées par l'impact sont ici de taille similaire sur les deux axes puisque le dépôt est superficiel, il est difficile de déterminer une valeur précise de l'accélération, mais on sait que l'accélération subie a dépassé une valeur donnée. Si la paroi 6 impactée est dans un matériau non déformable, on peut utiliser plusieurs masselottes 2 en parallèle, tel que visible sur la figure 5, la détermination de la masselotte 2, ou des masselottes 2, ayant déposé de la couleur indique l'accélération maximale. La mesure est discrétisée et donc plus précise qu'avec une masselotte 2 unique.

Une autre variante concerne une surface antagoniste 5 qui est une paroi de la structure 10 ou de l'autre élément 120 de la boîte de montre 110, et laquelle paroi est déformable de manière réversible. Notamment on peut utiliser une paroi 6 en matière déformable de manière réversible, par exemple une mousse, le diamètre de la zone colorée donne l'indication de l'accélération maximale subie avec une déformation réversible de la paroi 6 impactée.

Les figures 6 et 12 illustrent une variante où, au sein d'un témoin 20, la masselotte 2 est agencée pour percuter un matériau fragile au niveau d'un élément sécable 8, lequel est agencé au voisinage de la surface antagoniste 5, notamment une surface intérieure, et pour briser au moins partiellement cet élément sécable 8 lors de sa percussion contre la masselotte 2 et/ou contre une paroi 6, quand la masselotte 2 est soumise à une accélération supérieure au seuil inférieur d'accélération. Le composant sécable 8 impacté doit être bien dimensionné pour rompre sous une force d'impact donnée. Dans une variante particulière le composant sécable 8 est conçu pour se rompre, seul, sans masselotte 2, sous l'effet d'une accélération supérieure au seuil inférieur d'accélération. La figure 7 illustre plusieurs composants sécables 8, de résistances différentes en flexion, et placés en parallèle pour donner une indication plus précise de l'accélération subie. Cet agencement de la figure 7 peut coopérer, soit avec une masselotte unique, soit avec une pluralité de masselottes, identiques ou différentes.

Tel que visible sur la variante de la figure 12, de façon particulière, quand l'élément de liaison 3 et/ou la masselotte 2 et/ou au moins un élément sécable 8 est conçu pour une rupture lors d'un choc survenu quand la masselotte 2 est soumise à une accélération supérieure au seuil inférieur d'accélération , l'élément concerné, ou les éléments concernés s'il y en a plusieurs, est enfermé, ou respectivement sont enfermés, dans au moins une enveloppe souple 9 à l'intérieur du logement 4 de façon à ce que, en cas de rupture de cet élément ou respectivement de ces éléments, les débris issus de cette rupture restent enfermés dans une enveloppe souple 9. Plus particulièrement au moins un élément sécable 8 est enfermé dans une enveloppe souple 9 à l'intérieur du logement 4 de façon à ce que, en cas de rupture du élément sécable 8, les débris issus de cette rupture restent enfermés dans l'enveloppe souple 9, tel que visible sur la figure 12 qui montre une telle enveloppe souple 9 enfermant une pluralité d'éléments sécables 8 répartis selon les génératrices d'un logement 4 cylindrique.

Ainsi la masselotte 2 peut venir impacter un matériau fragile tel que céramique, nickel-phosphore, saphir, ou similaire, du composant sécable 8. Si ce dernier est cassé, on peut en conclure que la masselotte 2 est venue l'impacter et on peut connaître l'accélération subie.

Comme exposé ci-dessus, dans une autre variante, il est envisageable de supprimer la masselotte 2, et d'utiliser directement la fragilité en flexion du composant sécable 8 pour calculer l'accélération subie. Le composant sécable 8 qui casse en flexion peut également être indenté pour créer des amorces de rupture. Si on utilise plusieurs composants sécables 8 en parallèle, à la façon d'un clavier tel que visible sur la figure 7, chacun avec une géométrie différente et/ou une indentation plus ou moins importante, il est à nouveau possible de connaître de manière plus précise l'accélération maximale subie.

De façon particulière, au moins un logement 4 renferme complètement une masselotte 2 et le au moins un élément de liaison 3 qui est associé à cette masselotte 2. Cette configuration offre l'avantage de prévenir toute pollution de l'intérieur de la montre 100, et aussi de facilité l'inviolabilité du témoin 20 concerné. Ce logement 4 peut, notamment, appartenir à un insert 30 indexé en position par rapport à la structure 10 et fixé à cette dernière, à l'intérieur de la montre 100 et hors de portée de l'utilisateur. L'expertise peut alors être exécutée sur ce seul insert 30 une fois démonté de la montre 100 après son ouverture, cet insert 30 comportant alors un repérage complet identifiant sa position dans la montre, et sa position angulaire par rapport à la boîte 110 de la montre 100.

De façon avantageuse, pour garantir l'inviolabilité, au moins un logement 4 est obturé par un bouchon 41 inaccessible à l'utilisateur de la montre 100, tel que visible sur la figure 10 ou 13.

De façon particulière, tel que visible sur les figures 4 et 5, le dispositif 1 comporte une pluralité de témoins 20, qui se distinguent par des seuils inférieurs d'accélération distincts. Il est alors possible de déterminer la plus grande valeur d'accélération dépassée lors de la vie de la montre. Chaque masselotte 2 vient impacter la paroi 6 qui lui fait face avec une intensité d'accélération différente, mais uniquement selon un axe. La figure 4 illustre la variante par déformation, où la paroi 6 impactée est déformée de manière irréversible, et la figure 5 illustre la variante avec dépôt de transfert 71, et, dans les deux cas il est possible de connaître la valeur de l'accélération maximale qui a été dépassée.

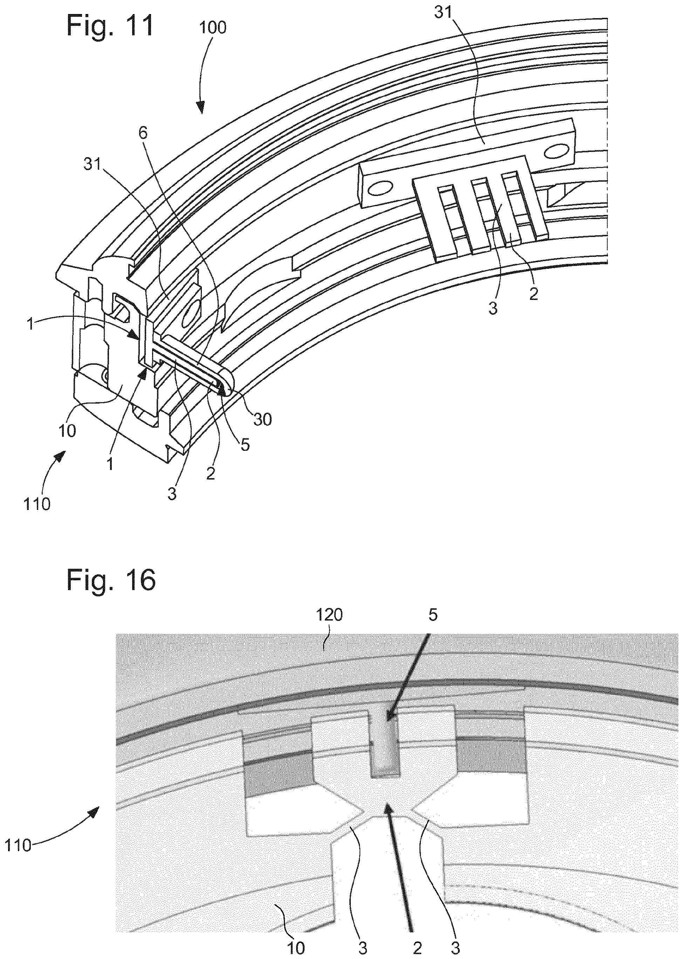

La figure 16 illustre une variante à l'inverse des autres variantes illustrées, où une platine 10 de la montre comporte deux lames flexibles 3 formant un vé, flexibles en torsion, et qui portent ensemble une masselotte 2 en U, qui entoure un pion fixé dans la carrure 120 et qui porte la surface antagoniste 5.

L'invention concerne encore une montre 100 comportant au moins un tel dispositif indicateur de choc 1.

Plus particulièrement, au moins une structure 10 est fixée à un élément 120 de la boîte 110 que comporte la montre 100, ou est solidaire avec cette boîte 110, ou est une partie de cette boîte 110, notamment une carrure, ou un fond, ou un réhaut, ou une platine, ou autre.

L'invention procure de nombreux avantages :
- facilité de détermination de l'accélération maximale subie par la montre lors des essais expérimentaux ou du porté client ;
- possibilité de moduler la précision souhaitée sur la valeur de l'accélération maximale ;
- facilité de réalisation de la mesure pratique de l'accélération maximale, par comparaison de la zone d'impact avec des mesures de référence ;
- possibilité de mesure selon plusieurs axes, voire selon les trois dimensions ;
- possibilité d'encastrement du dispositif indicateur de choc dans un composant de structure de la montre, tel que carrure, platine, fond, ou autre, sans nécessiter d'organe saillant à position variable ;
- utilisation d'espaces libres quelconques de la montre pour le positionnement du dispositif indicateur de choc ;
- facilité de remplacement du dispositif, avec un seul composant à changer après expertise;
- faible encombrement du dispositif ;
- faible coût.

## Revendications

1. Dispositif indicateur de choc (1) pour montre (100), agencé pour être inséré à l'intérieur d'une montre, et comportant une structure (10) à laquelle est fixée au moins une masselotte (2) par l'intermédiaire d'au moins un élément de liaison (3) en matériau élastique ou ductile ou fragile, déformable élastiquement ou plastiquement lors des mouvements imprimés à ladite au moins une masselotte (2), **caractérisé en ce que** au moins une dite masselotte (2) est mobile au voisinage d'une surface antagoniste (5) fixe que comporte ladite structure (10) elle-même ou un autre élément (120) d'une boîte (110) de montre, et est agencée pour venir en contact avec ladite surface antagoniste (5), de façon à imprimer un témoin d'impact ou une déformation permanente ou une rupture à ladite masselotte (2) et/ou audit élément de liaison (3) et/ou à ladite surface antagoniste (5), ou à un élément sécable (8) intégré audit dispositif indicateur de choc (1), quand l'accélération imprimée à ladite au moins une masselotte (2) est supérieure à un seuil inférieur d'accélération donné.

2. Dispositif indicateur de choc (1) selon la revendication 1, **caractérisé en ce que** au moins une dite masselotte (2) est appairée avec une dite surface antagoniste (5) avec laquelle ladite masselotte (2) est la seule à coopérer, pour former ensemble un témoin de choc (20).

3. Dispositif indicateur de choc (1) selon la revendication 1 ou 2, **caractérisé en ce que** au moins une dite masselotte (2) est mobile dans un logement (4) de ladite structure (10) au voisinage de ladite surface antagoniste (5) qui est une surface intérieure d'une paroi (6) dudit logement (4), et est agencée pour venir en contact avec ladite surface antagoniste (5) quand l'accélération imprimée à ladite au moins une masselotte (2) est supérieure à un seuil inférieur d'accélération donné.

4. Dispositif indicateur de choc (1) selon l'une des revendications 1 à 3, **caractérisé en ce que** ladite masselotte (2) et/ou le composant porteur de ladite surface antagoniste (5) est en matériau élastique ou ductile ou fragile, déformable élastiquement ou plastiquement lors des mouvements imprimés à ladite au moins une masselotte (2),

5. Dispositif indicateur de choc (1) selon les revendications 2 et 3, ou selon une des revendications dépendant des revendications 2 et 3, **caractérisé en ce que**, au sein d'un dit témoin (20), ladite paroi (6) est agencée pour subir une déformation locale irréversible sous la percussion de ladite masselotte (2) quand ladite masselotte (2) est soumise à une accélération supérieure audit seuil inférieur d'accélération.

6. Dispositif indicateur de choc (1) selon les revendications 2 et 3, ou selon une des revendications dépendant des revendications 2 et 3, **caractérisé en ce que**, au sein d'un dit témoin (20), ladite masselotte (2) est agencée pour subir une déformation locale irréversible lors de sa percussion contre une dite paroi (6), quand ladite masselotte est soumise à une accélération supérieure audit seuil inférieur d'accélération.

7. Dispositif indicateur de choc (1) selon les revendications 2 et 3, ou selon une des revendications dépendant des revendications 2 et 3, **caractérisé en ce que**, au sein d'un dit témoin (20), ladite paroi (6) est recouverte, au niveau de ladite surface antagoniste (5), d'une couche superficielle (7) agencée pour être au moins partiellement transférée sur ladite masselotte (2) sous la percussion de ladite masselotte (2) quand ladite masselotte (2) est soumise à une accélération supérieure audit seuil inférieur d'accélération.

8. Dispositif indicateur de choc (1) selon les revendications 2 et 3, ou selon une des revendications dépendant des revendications 2 et 3, **caractérisé en ce que**, au sein d'un dit témoin (20), ladite masselotte (2) est recouverte d'une couche superficielle (7) agencée pour être au moins partiellement transférée sur ladite surface antagoniste (5), lors de sa percussion contre une dite paroi (6), quand ladite masselotte est soumise à une accélération supérieure audit seuil inférieur d'accélération.

9. Dispositif indicateur de choc (1) selon l'une des revendications 1 à 8, **caractérisé en ce que** ladite surface antagoniste (5) est une paroi de ladite structure (10) ou dudit autre élément (120), et laquelle paroi est déformable de manière réversible.

10. Dispositif indicateur de choc (1) selon les revendications 2 et 3, ou selon une des revendications dépendant des revendications 2 et 3,**caractérisé en ce que**, au sein d'un dit témoin (20), ladite masselotte (2) est agencée pour percuter un élément sécable (8) agencé au voisinage de ladite surface antagoniste (5), et briser au moins partiellement ledit élément sécable (8) lors de sa percussion contre ladite masselotte (2) et/ou contre une dite paroi (6), quand ladite masselotte est soumise à une accélération supérieure audit seuil inférieur d'accélération.

11. Dispositif indicateur de choc (1) selon la revendication 10, **caractérisé en ce que** au moins un dit élément sécable (8) est enfermé dans une enveloppe souple (9) à l'intérieur dudit logement (4) de façon à ce que, en cas de rupture dudit élément sécable (8), les débris issus de cette rupture restent enfermés dans ladite enveloppe souple (9).

12. Dispositif indicateur de choc (1) selon la revendication 3 ou selon l'une des revendications dépendant de la revendication 3, **caractérisé en ce qu'**au moins un dit logement (4) renferme complètement une dite masselotte (2) et ledit au moins un élément de liaison (3) associé à ladite masselotte (2).

13. Dispositif indicateur de choc (1) selon l'une des revendications 1 à 12, **caractérisé en ce que** au moins une dite surface antagoniste (5) agencée pour coopérer avec une dite masselotte (2) est cylindrique ou sphérique pour matérialiser la présence d'un choc selon plusieurs degrés de liberté.

14. Dispositif indicateur de choc (1) selon l'une des revendications 1 à 13, **caractérisé en ce que** au moins une dite masselotte (2) est cylindrique ou sphérique pour matérialiser la présence d'un choc selon plusieurs degrés de liberté.

15. Dispositif indicateur de choc (1) selon l'une des revendications 1 à 14, **caractérisé en ce qu'**au moins un dit élément de liaison (3) est une lame élastique sensiblement droite, pleine ou tubulaire.

16. Dispositif indicateur de choc (1) selon l'une des revendications 1 à 14, **caractérisé en ce qu'**au moins un dit élément de liaison (3) comporte au moins un fil.

17. Dispositif indicateur de choc (1) selon l'une des revendications 1 à 14, **caractérisé en ce qu'**au moins un dit élément de liaison (3) comporte au moins un ressort hélicoïdal (32) ou un ressort spiral.

18. Dispositif indicateur de choc (1) selon l'une des revendications 1 à 17, **caractérisé en ce que** ledit dispositif (1) comporte une pluralité de dits éléments de liaison (3).

19. Dispositif indicateur de choc (1) selon la revendication 18, **caractérisé en ce que** les dits éléments de liaison (3) ne sont pas identiques, et présentent des caractéristiques différentes, et sont chacun agencé pour adopter une déformation permanente dans le domaine plastique, ou pour rompre, dès l'atteinte d'un seuil d'accélération distinct de celui des autres dits éléments de liaison (3).

20. Dispositif indicateur de choc (1) selon l'une des revendications 1 à 19, **caractérisé en ce qu'**au moins un dit logement (4) est obturé par un bouchon (41) inaccessible à l'utilisateur de ladite montre (100).

21. Dispositif indicateur de choc (1) selon la revendication 2 ou l'une des revendications dépendantes de la revendication 2, **caractérisé en ce que** ledit dispositif (1) comporte une pluralité de dits témoins (20) qui se distinguent par des seuils inférieurs d'accélération distincts.

22. Montre (100) comportant au moins un dispositif indicateur de choc (1) selon l'une des revendications 1 à 21.

23. Montre (100) selon la revendication 22, **caractérisée en ce qu'**au moins une dite structure (10) est fixée à un élément de la boîte (110) que comporte ladite montre (100) ou est solidaire avec ladite boîte (110) ou est une partie de ladite boîte (110).

## Patentansprüche

1. Stoßindikatorvorrichtung (1) für eine tragbare Uhr (100), die dazu vorgesehen ist, in eine Uhr eingesetzt zu werden, und eine Struktur (10) umfasst, an der mindestens ein Fliehgewicht (2) über mindestens ein Verbindungselement (3) aus einem elastischen oder dehnbaren oder fragilen Material befestigt ist, das elastisch oder plastisch verformbar ist, wenn das mindestens eine Fliehgewicht (2) Bewegungen ausgesetzt ist, **dadurch gekennzeichnet, dass** mindestens ein Fliehgewicht (2) in der Nähe einer festen Gegenoberfläche (5), die die Struktur (10) selbst oder ein anderes Element (120) eines Uhrengehäuses (110) aufweist, beweglich ist und dazu vorgesehen ist, mit der Gegenoberfläche (5) in Kontakt zu gelangen, derart, dass an dem Fliehgewicht (2) und/oder dem Verbindungselement (3) und/oder der Gegenoberfläche (5) oder an einem in die Stoßindikatorvorrichtung (1) integrierten, teilbaren Element (8) ein Stoßnachweis oder eine dauerhafte Verformung oder ein Bruch bewirkt werden, wenn die auf das mindestens eine Fliehgewicht (2) ausgeübte Beschleunigung größer als ein bestimmter unterer Beschleunigungsschwellenwert ist.

2. Stoßindikatorvorrichtung (1) nach Anspruch 1, **dadurch gekennzeichnet, dass** mindestens ein Fliehgewicht (2) mit einer Gegenoberfläche (5) gepaart ist, mit der nur dieses Fliehgewicht (2) zusammenwirkt, um zusammen einen Stoßnachweis (20) zu bilden.

3. Stoßindikatorvorrichtung (1) nach Anspruch 1 oder 2, **dadurch gekennzeichnet, dass** mindestens ein Fliehgewicht (2) in einem Aufnahmeraum (4) der Struktur (10) in der Nähe der gegenüberliegenden Oberfläche (5) beweglich ist, die eine Innenfläche einer Wand (6) des Aufnahmeraums (4) ist, und so angeordnet ist, dass sie mit der Gegenoberfläche (5) in Kontakt gelangt, wenn die auf das mindestens eine Fliehgewicht (2) ausgeübte Beschleunigung größer ist als ein bestimmter unterer Beschleunigungsschwellenwert.

4. Stoßindikatorvorrichtung (1) nach einem der Ansprüche 1 bis 3, **dadurch gekennzeichnet, dass** das Fliehgewicht (2) und/oder die Trägerkomponente der Gegenoberfläche (5) aus einem elastischen oder dehnbaren oder fragilen Material hergestellt sind, das bei auf das mindestens eine Fliehgewicht (2) ausgeübte Bewegungen elastisch oder plastisch verformbar ist.

5. Stoßindikatorvorrichtung (1) nach den Ansprüchen 2 und 3 oder nach einem der von den Ansprüchen 2 und 3 abhängigen Ansprüche, **dadurch gekennzeichnet, dass** innerhalb einer Nachweiseinrichtung (20) die Wand (6) so angeordnet ist, dass sie während des Aufpralls des Fliehgewichts (2) eine irreversible räumlich begrenzte Verformung erfährt, wenn das Fliehgewicht (2) einer Beschleunigung oberhalb des unteren Beschleunigungsschwellenwerts ausgesetzt wird.

6. Stoßindikatorvorrichtung (1) nach den Ansprüchen 2 und 3 oder nach einem der von den Ansprüchen 2 und 3 abhängigen Ansprüche, **dadurch gekennzeichnet, dass** innerhalb der Nachweiseinrichtung (20) das Fliehgewicht (2) so angeordnet ist, dass es während seines Aufpralls gegen die Wand (6) eine irreversible räumlich begrenzte Verformung erfährt, wenn das Fliehgewicht einer Beschleunigung oberhalb des unteren Beschleunigungsschwellenwerts ausgesetzt wird.

7. Stoßindikatorvorrichtung (1) nach den Ansprüchen 2 und 3 oder nach einem der von den Ansprüchen 2 und 3 abhängigen Ansprüche, **dadurch gekennzeichnet, dass** innerhalb der Nachweiseinrichtung (20) die Wand (6) auf Höhe der Gegenoberfläche (5) mit einer Oberflächenschicht (7) beschichtet ist, die so angeordnet ist, dass sie unter dem Aufprall des Fliehgewichts (2) zumindest teilweise auf das Fliehgewicht (2) übertragen wird, wenn das Fliehgewicht (2) einer Beschleunigung oberhalb des unteren Beschleunigungsschwellenwerts ausgesetzt wird.

8. Stoßindikatorvorrichtung (1) nach den Ansprüchen 2 und 3 oder nach einem der von den Ansprüchen 2 und 3 abhängigen Ansprüche, **dadurch gekennzeichnet, dass** innerhalb der Nachweiseinrichtung (20) das Fliehgewicht (2) mit einer Oberflächenschicht (7) beschichtet ist, die so angeordnet ist, dass sie während seines Aufpralls gegen die Wand (6) zumindest teilweise auf die Gegenoberfläche (5) übertragen wird, wenn das Fliehgewicht einer Beschleunigung oberhalb des unteren Beschleunigungsschwellenwerts ausgesetzt wird.

9. Stoßindikatorvorrichtung (1) nach einem der Ansprüche 1 bis 8, **dadurch gekennzeichnet, dass** die Gegenoberfläche (5) eine Wand der Struktur (10) oder des anderen Elements (120) ist, wobei diese Wand reversibel verformbar ist.

10. Stoßindikatorvorrichtung (1) nach den Ansprüchen 2 und 3 oder nach einem der von den Ansprüchen 2 und 3 abhängigen Ansprüche, **dadurch gekennzeichnet, dass** innerhalb der Nachweiseinrichtung (20) das Fliehgewicht (2) so angeordnet ist, dass es auf ein teilbares Element (8) aufprallt, das in der Nähe der Gegenoberfläche (5) angeordnet ist, und das teilbare Element (8) zumindest teilweise zerbricht, während es gegen das Fliehgewicht (2) und/oder gegen eine Wand (6) stößt, wenn das Fliehgewicht einer Beschleunigung oberhalb des unteren Beschleunigungsschwellenwerts ausgesetzt wird.

11. Stoßindikatorvorrichtung (1) nach Anspruch 10, **dadurch gekennzeichnet, dass** mindestens ein teilbares Element (8) in eine flexible Hülle (9) innerhalb des Aufnahmeraums (4) eingeschlossen ist, damit im Fall eines Bruchs des teilbaren Elements (8) die aus diesem Bruch entstehenden Abfälle in der elastischen Hülle (9) eingeschlossen bleiben.

12. Stoßindikatorvorrichtung (1) nach Anspruch 3 oder nach einem der von Anspruch 3 abhängigen Ansprüche, **dadurch gekennzeichnet, dass** mindestens ein Aufnahmeraum (4) ein Fliehgewicht (2) und das mindestens eine dem Fliehgewicht (2) zugeordnete Verbindungselement (3) vollständig einschließt.

13. Stoßindikatorvorrichtung (1) nach einem der Ansprüche 1 bis 12, **dadurch gekennzeichnet, dass** mindestens eine Gegenoberfläche (5), die dazu vorgesehen ist, mit einem Fliehgewicht (2) zusammenzuwirken, zylindrisch oder sphärisch ist, um das Vorhandensein eines Stoßes in mehreren Freiheitsgraden darzustellen.

14. Stoßindikatorvorrichtung (1) nach einem der Ansprüche 1 bis 13, **dadurch gekennzeichnet, dass** mindestens ein Fliehgewicht (2) zylindrisch oder sphärisch ist, um das Vorhandensein eines Stoßes in mehreren Freiheitsgraden darzustellen.

15. Stoßindikatorvorrichtung (1) nach einem der Ansprüche 1 bis 14, **dadurch gekennzeichnet, dass** mindestens ein Verbindungselement (3) eine im Wesentlichen geradlinige, massive oder rohrförmige elastische Lamelle ist.

16. Stoßindikatorvorrichtung (1) nach einem der Ansprüche 1 bis 14, **dadurch gekennzeichnet, dass** mindestens ein Verbindungselement (3) mindestens einen Draht umfasst.

17. Stoßindikatorvorrichtung (1) nach einem der Ansprüche 1 bis 14, **dadurch gekennzeichnet, dass** mindestens ein Verbindungselement (3) mindestens eine Schraubenfeder (32) oder eine Spiralfeder umfasst.

18. Stoßindikatorvorrichtung (1) nach einem der Ansprüche 1 bis 17, **dadurch gekennzeichnet, dass** die Vorrichtung (1) mehrere Verbindungselemente (3) umfasst.

19. Stoßindikatorvorrichtung (1) nach Anspruch 18, **dadurch gekennzeichnet, dass** die Verbindungselemente (3) nicht gleich sind und unterschiedliche Eigenschaften aufweisen und jeweils dazu vorgesehen sind, eine dauerhafte Verformung im plastischen Bereich anzunehmen oder zu brechen, sobald ein Beschleunigungsschwellenwert erreicht wird, der von jenem der anderen Verbindungselemente (3) verschieden ist.

20. Stoßindikatorvorrichtung (1) nach einem der Ansprüche 1 bis 19, **dadurch gekennzeichnet, dass** mindestens ein Aufnahmeraum (4) durch einen Stopfen (41) verschlossen ist, der für den Benutzer der Uhr (100) unzugänglich ist.

21. Stoßindikatorvorrichtung (1) nach Anspruch 2 oder einem der von Anspruch 2 abhängigen Ansprüche, **dadurch gekennzeichnet, dass** die Vorrichtung (1) mehrere Nachweiseinrichtungen (20) umfasst, die sich durch verschiedene untere Beschleunigungsschwellenwerte unterscheiden.

22. Tragbare Uhr (100), umfassend mindestens eine Stoßindikatorvorrichtung (1) nach einem der Ansprüche 1 bis 21.

23. Tragbare Uhr (100) nach Anspruch 22, **dadurch gekennzeichnet, dass** mindestens eine Struktur (10) an einem Element des Gehäuses (110), das die Uhr (100) aufweist, befestigt ist oder mit dem Gehäuse (110) fest verbunden ist oder ein Teil des Gehäuses (110) ist.

## Claims

1. Shock indicator device (1) for a watch (100), arranged to be inserted inside a watch, and comprising a structure (10) to which is fixed at least one inertia block (2) by means of at least one connecting element (3) made of elastic or ductile or breakable material, which is elastically or plastically deformable when movements are imparted to said at least one inertia block (2), **characterized in that** at least one said inertia block (2) is movable in proximity to a fixed opposing surface (5) comprised in said structure (10) itself or another element (120) of a watch case (110), and is arranged to come into contact with said opposing surface (5), so as to impart a proof indicator of impact or a permanent deformation or damage to said inertia block (2) and/or to said connecting element (3) and/or to said opposing surface (5), or to a breakable element (8) incorporated in said shock indicator device (1), when the acceleration imparted to said at least one inertia block (2) is higher than a given lower acceleration threshold.

2. Shock indicator device (1) according to claim 1, **characterized in that** at least one said inertia block (2) is paired with a said opposing surface (5) with which only said inertia block (2) cooperates, to form together a shock proof indicator (20).

3. Shock indicator device (1) according to claim 1 or 2, **characterized in that** at least one said inertia block (2) is movable inside a housing (4) of said structure (10) in proximity to said opposing surface (5) which is an inner surface of a wall (6) of said housing (4), and is arranged to come into contact with said opposing surface (5), when the acceleration imparted to said at least one inertia block (2) is higher than a given lower acceleration threshold.

4. Shock indicator device (1) according to one of claims 1 to 3, **characterized in that** said inertia block (2) and/or the component bearing said opposing surface (5) is made of elastic or ductile or breakable material, which is elastically or plastically deformable when movements are imparted to said at least one inertia block (2).

5. Shock indicator device (1) according to claims 2 and 3, or according to one of the claims dependent on claims 2 and 3, **characterized in that**, in a said shock proof indicator (20), said wall (6) is arranged to undergo a local irreversible deformation when struck by said inertia block (2) when said inertia block (2) is subjected to a higher acceleration than said lower acceleration threshold.

6. Shock indicator device (1) according to claims 2 and 3, or according to one of the claims dependent on claims 2 and 3, **characterized in that**, in a said shock proof indicator (20), said inertia block (2) is arranged to undergo a local irreversible deformation on striking against a said wall (6), when said inertia block is subjected to a higher acceleration than said lower acceleration threshold.

7. Shock indicator device (1) according to claims 2 and 3, or according to one of the claims dependent on claims 2 and 3, **characterized in that**, in a said shock proof indicator (20), said wall (6) is coated, on said opposing surface (5), with a surface layer (7) arranged to be at least partially transferred onto said inertia block (2) when struck by said inertia block (2), when said inertia block (2) is subjected to an acceleration higher than said lower acceleration threshold.

8. Shock indicator device (1) according to claims 2 and 3, or according to one of the claims dependent on claims 2 and 3, **characterized in that**, in a said shock proof indicator (20), said inertia block (2) is coated with a surface layer (7) arranged to be at least partially transferred onto said opposing surface (5), when said inertia block strikes against a said wall (6), when said inertia block is subjected to an acceleration higher than said lower acceleration threshold.

9. Shock indicator device (1) according to one of claims 1 to 8, **characterized in that** said opposing surface (5) is a wall of said structure (10) or of said other element (120), and said wall is reversibly deformable.

10. Shock indicator device (1) according to claims 2 and 3, or according to one of the claims dependent on claims 2 and 3, **characterized in that**, in a said shock proof indicator (20), said inertia block (2) is arranged to strike a breakable element (8) arranged in proximity to said opposing surface (5), and to at least partially break said breakable element (8) when the latter collides with said inertia block (2) and/or with a said wall (6), when said inertia block is subjected to a higher acceleration than said lower acceleration threshold.

11. Shock indicator device (1) according to claim 10, **characterized in that** at least one said breakable element (8) is enclosed in a flexible envelope (9) inside said housing (4) so that, in the event of damage to said breakable element (8), the debris from said damage remains enclosed in said flexible envelope (9).

12. Shock indicator device (1) according to claim 3 or according to one of the claims dependent on claim 3, **characterized in that** at least one said housing (4) completely encloses a said inertia block (2) and said at least one connecting element (3) associated with said inertia block (2).

13. Shock indicator device (1) according to one of claims 1 to 12, **characterized in that** at least one said opposing surface (5) arranged to cooperate with a said inertia block (2) is cylindrical or spherical to mark the presence of a shock in several degrees of freedom.

14. Shock indicator device (1) according to one of claims 1 to 13, **characterized in that** at least one said inertia block (2) is cylindrical or spherical to mark the presence of a shock in several degrees of freedom.

15. Shock indicator device (1) according to one of claims 1 to 14, **characterized in that** at least one said connecting element (3) is a substantially straight, solid or tubular elastic strip.

16. Shock indicator device (1) according to one of claims 1 to 14, **characterized in that** at least one said connecting element (3) includes at least one wire.

17. Shock indicator device (1) according to one of claims 1 to 14, **characterized in that** at least one said connecting element (3) includes at least one helical spring (32) or one spiral spring.

18. Shock indicator device (1) according to one of claims 1 to 17, **characterized in that** said device (1) includes a plurality of said connecting elements (3).

19. Shock indicator device (1) according to claim 18, **characterized in that** said connecting elements (3) are not identical, and have different features, and are each arranged to experience a permanent deformation in the plastic range, or to break, as soon as an acceleration threshold, distinct from that of the other said connecting elements (3), is reached.

20. Shock indicator device (1) according to one of claims 1 to 19, **characterized in that** at least one said housing (4) is sealed by a cap (41) inaccessible to the user of said watch (100).

21. Shock indicator device (1) according to claim 2 or one of the claims dependent on claim 2, **characterized in that** said device (1) includes a plurality of said shock proof indicators (20) which are distinguished by distinct lower acceleration thresholds.

22. Watch (100) including at least one shock indicator device (1) according to one of claims 1 to 21.

23. Watch (100) according to claim 22, **characterized in that** at least one said structure (10) is fixed to an element of the case (110) of said watch (100) or is integral with said case (110) or is a part of said case (110).
